# EUROPÄISCHE PATENTSCHRIFT

(11) **EP 1 525 071 B1**
(45) Veröffentlichungstag und Bekanntmachung des Hinweises auf die Patenterteilung: **03.05.2006**
(21) Anmeldenummer: 04763204.7
(22) Anmeldetag: 14.07.2004
(51) Int. Cl.: B23K 37/04

(54) **SPANNEINRICHTUNG**
CLAMPING DEVICE
DISPOSITIF DE SERRAGE

(30) Priorität: 07.08.2003 DE 20312401 U
(43) Veröffentlichungstag der Anmeldung: 27.04.2005
(73) Patentinhaber: KUKA Schweissanlagen GmbH, 86165 Augsburg (DE)
(72) Erfinder: STURM, Thomas, 85259 Wiedenzhausen (DE)
(74) Vertreter: Ernicke, Hans-Dieter
(86) Internationale Anmeldenummer: PCT/EP2004/007754
(87) Internationale Veröffentlichungsnummer: WO 2005/016591

(56) Entgegenhaltungen:
- WO-A-95/32886
- US-B1- 6 378 186
- US-B1- 6 457 574

## Beschreibung

Die Erfindung betrifft eine Spanneinrichtung für Bauteile, insbesondere Karosseriebauteile, mit den Merkmalen im Oberbegriff des Hauptanspruchs.

In der Praxis des Karosserierohbaus ist es bekannt und üblich, in sogenannten Framingstationen oder auch in nachfolgenden Ausschweißstationen die Karosseriebauteile mittels Spannrahmen zu spannen. Diese Spannrahmen bestehen aus einem massiven Rahmengestell, an dem eine Vielzahl von Einzelspannern an den benötigten Stellen angeordnet sind. Mit diesen Einzelspannern können mehrere Bauteile zusammengespannt werden, wobei ein für die Schweißverbindung benötigter Bauteilflansch und eine andere Bauteil-Spannkontur gebildet wird. Ein derartiger Spannrahmen in Verbindung mit einer konventionellen Zustellvorrichtung ist z. B. aus der DE 38 28 267 A1 bekannt. Aus der EP 0 760 770 B1 ist es ferner bekannt, derartige Spannrahmen auch mittels Robotern zu handhaben und an die Fahrzeugkarosserie zuzustellen.

Im Vorrichtungsbau werden stationäre Spanneinrichtungen eingesetzt, die aus einer Vielzahl von Einzelspannern bestehen, in die die Bauteile eingelegt werden. Eine derartige Spanneinrichtung ist zum Beispiel aus der DE 201 03 412 U1 bekannt.

Der Einsatz von Einzelspannern bei den bekannten Spanneinrichtungen hat verschiedene Nachteile. Durch ihre Baugröße können die Einzelspanner nur in größeren Abständen angeordnet werden, was für manche Spannaufgaben zu Problemen führt. Andererseits kann es beim üblicherweise zeitversetzten Schließen der Einzelspanner und der punktuellen Spannwirkung zu Verformungen an den Bauteilen kommen. Schließlich müssen beim Nahtschweißen mittels Laserstrahl die Spanner nacheinander geöffnet und dann wieder geschlossen werden, um einen hindernisfreien Umlauf des Laserstrahls zu ermöglichen. Dies kann wegen der großen Spannerabstände ebenfalls lokal zu Spannproblemen führen, insbesondere wenn der Bauteilflansch sich öffnet und dadurch unerwünschte oder zu große Spalte zwischen den Bauteilen entstehen. Besondere Probleme ergeben sich beim Spannen von Bauteilflanschen an Karosserieöffnung, z.B. Tür- oder Fensteröffnungen. Die Einzelspanner werden aus den vorgenannten Gründen den Spannaufgaben häufig nicht in befriedigender Weise gerecht. Zudem behindern sie durch ihren hohen Platzbedarf den Zugang für Bearbeitungsgeräte, z.B. Schweißroboter etc.. Insgesamt haften den mit Einzelspannern bestückten Spanneinrichtungen die Nachteile des hohen Platzbedarfs und Gewichts, des großen Montage- und Abstimmaufwands und des entsprechend hohen Preises an.

Es ist Aufgabe der vorliegenden Erfindung, eine bessere Spanntechnik aufzuzeigen.

Die Erfindung löst diese Aufgabe mit den Merkmalen im Hauptanspruch.
Die beanspruchte Spanneinrichtung hat den Vorteil, dass sie bessere Spannergebnisse bringt, einen kleineren Platzbedarf aufweist und dabei insbesondere sehr flach bauen kann. Zudem bietet die Spanneinrichtung erheblich mehr Freiraum für Bearbeitungsgeräte. Besondere Vorteile ergeben sich, wenn ganze Ausschnitte oder Konturverläufe an Bauteilen auf einmal gespannt werden sollen, was z.B. bei Karosserieöffnungen, Verbindungsstellen zwischen Karosserieteilen, z.B. Seitenwand und Dachteil oder dergleichen der Fall ist.

Die beanspruchten Spanngeräte erlauben es, mit den Spannsegmenten jede gewünschte Spanngeometrie bei minimalen Platzbedarf zu schaffen. Durch die flache Bauweise ist es dabei möglich, die Spanneinheiten bei der Flanschbearbeitung, z.B. beim Lasernahtschweißen, geschlossen zu halten und dadurch definierte Spann- und Prozessbedingungen zu schaffen und beizubehalten. Ferner ist es möglich, die Spanneinheiten gemeinsam in einer steuerbaren Abfolge zu betätigen und sie dabei vorzugsweise gleichzeitig zuzustellen und im Spannschluss zu bringen. Hierdurch können exakt definierte Spannbedingungen geschaffen werden, wobei unerwünschte Verformungen der Bauteile vermieden werden.

Besondere Vorteile ergeben sich, wenn Innenflansche an Bauteilöffnungen, insbesondere Tür- oder Fensteröffnungen von Karosseriebauteilen gespannt werden sollen. Der Bauteilflansch kann mit einem einzigen Spanngerät umlaufend gespannt werden, wobei dank der bevorzugten Zustell- und Spannkinematik das Spanngerät mit zurückgezogenen beweglichen Spanneinheiten an die Bauteilöffnung zugestellt werden kann. Die zurückgezogenen Spanneinheiten können dabei am Bauteilflansch vorbeibewegt und dann an der Flanschrückseite zugestellt und in Spannstellung gebracht werden. Alternativ ist ein Spannen von ein oder mehreren außen liegenden Bauteilflanschen möglich.

Die Spanngeräte können in beliebiger Weise zugestellt und auch in ihrer Spannposition fixiert werden. Hierbei ist es durch entsprechende geeignete Abstützungen sowohl möglich, einen äußeren Netzbezug, als auch einen Bauteilbezug zu schaffen. Im äußeren Netzbezug werden evtl. Bauteiltoleranzen aufgenommen und verformte Bauteile notfalls in die korrekte Soll-Lage beim Spannen gezwungen. Die Abstützung erfolgt aber gegenüber externen Positioniereinrichtungen. Bei der Bildung eines Bauteilbezugs orientiert sich das Spanngerät an der vorhanden Geometrie der Bauteile, wobei die Abstützung gegenüber geeigneten Bezugspunkten an den Bauteilen erfolgt. In diesem Fall können Bauteiltoleranzen in höherem Maß toleriert werden.

Die Spanngeräte können an konventionellen Spannrahmen anstelle der Einzelspanner angebracht und von diesen Spannrahmen relativ zur Fahrzeugkarosserie bewegt werden. Mittels standardisierter Zuführmodule ist hierbei ein modularer Spannrahmenaufbau möglich. Alternativ können die Spanngeräte auch auf beliebige andere Weise zugeführt werden, z.B. mittels Transportrobotern. Für eine Innen- oder Außenzustellung eignen sich z.B. auch Hubvorrichtungen oder Förderer mit einem Halter für mehrere Spanngeräte, welcher eigene Zustell- und Bewegungsachsen aufweist. Die Spanngeräte eignen sich ferner für eine manuelle Zuführung, die z.B. mittels einer beweglichen Aufhängung an einem Balancer möglich ist. Bei der Zuführung von Hand oder mittels Transportrobotern können zum exakten Positionieren der Spanngeräte eine stationäre Führung zum Andocken oder Fixpunkte am Bauteil vorhanden sein. Die Spanngeräte können in Spannstellung außerdem selbsttragend und am Bauteil abgestützt sein, was z.B. beim Ausschweißen von zuvor gehefteten Bauteilen und bei ausreichender Stabilität der Spannkontur oder anderer Abstützpunkte am Bauteil möglich ist.

Die Spanngeräte besitzen eine Stellvorrichtung, mit der die beweglichen Spanneinheiten in der gewünschten Weise zugestellt und in Spannschluss zu den festen Spanneinheiten gebracht werden. Für die Stellvorrichtung gibt es die unterschiedlichsten konstruktiven Ausgestaltungsmöglichkeiten. In der bevorzugten Ausführungsform mit Exzenterwellen ist es möglich, mittels eines einzigen Antriebsmotors alle beweglichen Spanneinheiten beweglich und definiert zu bewegen, wobei eine zweiachsige Bewegung beim Zustellen und Spannen möglich ist. Alternativ kann ein manueller Spannantrieb mit Ratsche oder dgl. eingesetzt werden. Außerdem lässt sich die Zuführvorrichtung, insbesondere ein Roboter, als Spannantrieb einsetzen.

Die Bauteilflansche können in beliebigen Spannstellungen gespannt werden. Hierbei ist auch eine bewusste Spaltbildung möglich, wie sie z.B. zum Schweißen von beschichteten Blechen für das Ausgasen der Beschichtung nützlich ist. Das Spanngerät kann ferner außer zum Spannen der Bauteilflansche auch für deren Verformung benutzt werden, wobei z.B. Sicken für die Bildung von örtlichen Spalten zwischen den Bauteilflanschen eingeprägt werden. Dieser Prägevorgang kann separat vor dem Spannen und ggf. auch am Einzelbauteil erfolgen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Spanneinrichtung mit zwei Spanngeräten an einer Fahrzeugkarosserie,
- Figur 2:: einen abgebrochenen und vergrößerten Querschnitt durch ein Spanngerät im Eckbereich,
- Figur 3:: eine geklappte Seitenansicht auf die Anordnung von Figur 2 gemäß Pfeil III,
- Figur 4:: eine Draufsicht auf die Anordnung von Figur 2 gemäß Pfeil IV,
- Figur 5:: eine abgebrochene Unteransicht des Spanngeräts gemäß Pfeil IV von Figur 3,
- Figur 6 bis 9:: eine Variante der Spanneinheiten in verschiedenen Bewegungsstellungen,
- Figur 10:: eine Exzenterwelle mit Zustell- und Spannexzenter nebst Gleitsteinen in perspektivischer Ansicht,
- Figur 11:: eine Bearbeitungsstation in Stirnansicht mit einer Spanneinrichtung mit mehreren Transportroboten und Spanngeräten,
- Figur 12:: eine Variante der Bearbeitungsstation von Figur 11 mit einer anderen Zustellvorrichtung für eine Innenzustellung von oben,
- Figur 13:: eine Seitenansicht einer Fahrzeug-Seitenwand mit zwei in den Türausschnitten von innen zugestellten Spanngeräten,
- Figur 14, 15:: eine Variante zu Figur 12 mit einer frontseitigen Innzustellung von Spanngeräten in Seiten und Stirnansicht,
- Figur 16:: einen modularen Aufbau einer Zustellvorrichtung für Spanngeräte,
- Figur 17:: eine Variante des Spanngerätes mit einer Außenzustellung,
- Figur 18:: eine Spannsituation mit aufeinander liegenden Bauteilflanschen und
- Figur 19, 20:: eine Variante der Spannsituation mit Spalt zwischen den Bauteilflanschen.

Die Erfindung betrifft eine Spanneinrichtung (1), die zumindest aus ein oder mehreren Spanngeräten (2,3) besteht, welche nachfolgend im einzelnen beschrieben werden. Zur Spanneinrichtung (1) können ferner ein oder mehrere Zuführvorrichtungen gehören, die in den gezeigten Ausführungsbeispielen einmal als Spannrahmen (4) und in der anderen Variante als Roboter (5) ausgebildet sind. Gegenstand der Erfindung ist außerdem eine Bearbeitungsstation (6), insbesondere eine Framingstation oder Geostation, mit einer solchen Spanneinrichtung (1) und weiteren, nicht dargestellten Komponenten, z.B. Bearbeitungsgeräten, insbesondere Schweißrobotern, Werkzeugmagazinen, Bauteilförderern und dergleichen.

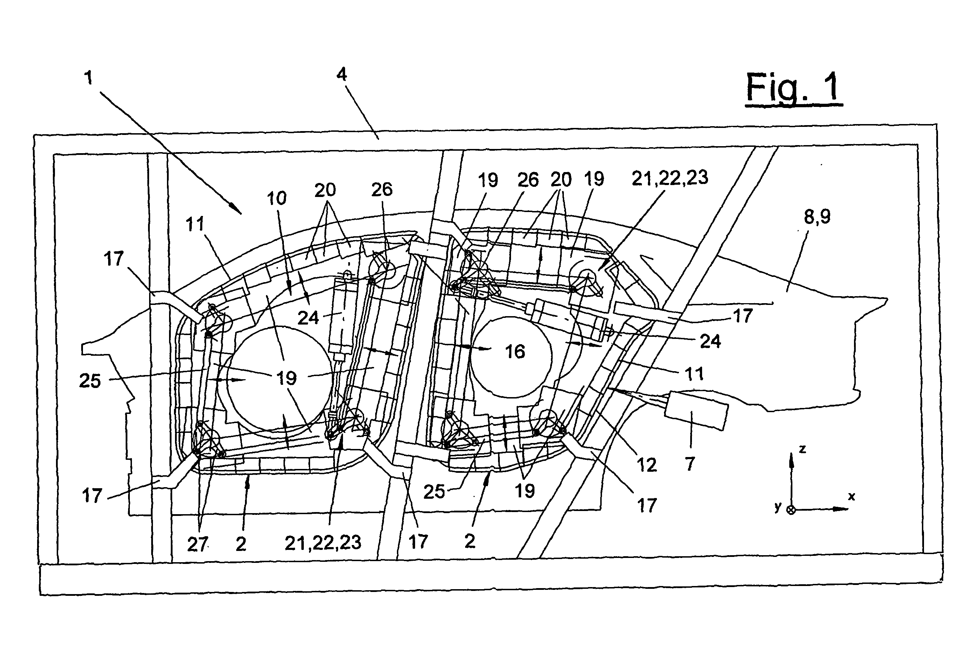

Die Spanneinrichtung (1) dient zum Spannen von Bauteilen (8,9). Hierbei handelt es sich vorzugsweise um Karosseriebauteile. Die Bauteile (8,9) können ansonsten aber auch beliebige andere Werkstücke sein. Die gemeinsam gespannten Bauteile (8,9) können in beliebiger Weise bearbeitet oder behandelt werden. Üblicherweise werden sie miteinander gefügt bzw. verbunden, was mittels eines geeigneten Bearbeitungswerkzeugs (7), z.B. dem in Figur 1 schematisch dargestellten Laserschweißkopf, geschieht. Die zu verbindenden Bauteile (8,9), bei denen es sich im Ausführungsbeispiel von Figur 1 um Komponenten einer Fahrzeugseitenwand handelt, haben abgekantete Ränder, die aufeinander liegen und mindestens einen Bauteilflansch (11) bilden. An diesem Bauteilflansch (11), der zugleich die Bauteil-Spannkontur bildet, werden die Bauteile (8,9) in ihrer Verbindungslage von der Spanneinrichtung (1) gespannt. Im Ausführungsbeispiel von Figur 1 haben die Bauteile (8,9) zwei Bauteilöffnungen (10), welche die vordere und hintere Türöffnung der Seitenwand repräsentieren. An diesen Bauteilöffnungen (10) ist ein innenliegender und über die gesamte Öffnungskontur umlaufender Bauteilflansch (11) vorhanden.

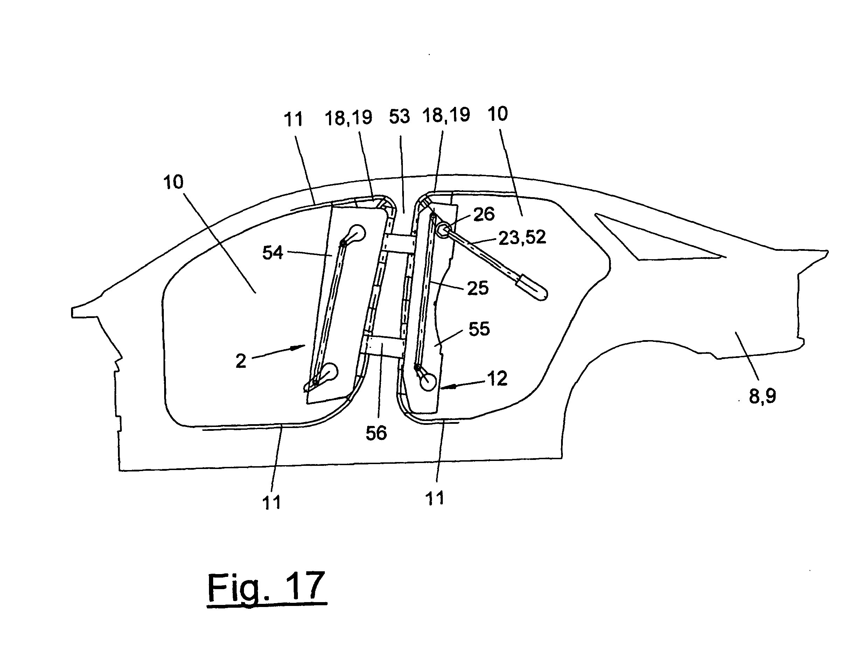

Mit den nachfolgend näher beschriebenen Spanngeräten (2) werden diese umlaufenden Bauteilflansche (11) auf einem mehr oder weniger großen Teil ihrer Länge gespannt. In der Variante von Figur 1 ist die Spannlänge der gesamte über die Bauteilöffnung umlaufende Bauteilflansch (11). In der Abwandlung von Figur 17 ist die Spannlänge kürzer, wobei z.B. nur die beidseitigen Bauteilflansche (11) an der B-Säule (53) gespannt werden. Die Spanngeräte (2) werden hierbei an und zumindest teilweise in den Bauteilöffnungen (10) positioniert. Im Innenbereich oder seitlich lassen die Spanngeräte (2,3) einen Freiraum (16) offen, durch den Bearbeitungsgeräte, z.B. mehrachsige Schweißroboter hindurchgreifen und mit ihren Bearbeitungswerkzeugen die in den Zeichnungen von Figur 1 und 17 unsichtbare Rückseite der Karosserieseitenwand bearbeiten können.

Die Spanngeräte (2) haben in der Ausführungsform von Figur 1 einen Netzbezug. Sie sind hierbei über mehrere geeignete Abstützungen (17), z.B. Befestigungsflansche an Streben eines umgebenden Spannrahmens (4) befestigt. Der Spannrahmen (4) wird in der Bearbeitungsstation in geeigneter Weise in eine vorgegebene Raumposition gebracht und gehalten. Hierzu kann der Spannrahmen (4) stationär an einem Gestell oder auch an einem palettenartigen Träger der Bauteile (8,9) positioniert und abgesteckt werden. Der Spannrahmen (4) bildet eine Zuführvorrichtung, mit der beide Spanngeräte (2) an die Bauteile (8,9) zugeführt werden können. Die Zuführbewegung kann auch kinematisch umgedreht sein. Durch die Spannfunktion der Spanngeräte (2) werden die Bauteile (8,9) in einer im absoluten Raumkoordinatensystem vorgegebenen Position gespannt und dabei im Fall von Maß- und Formabweichungen gegebenenfalls etwas verformt.

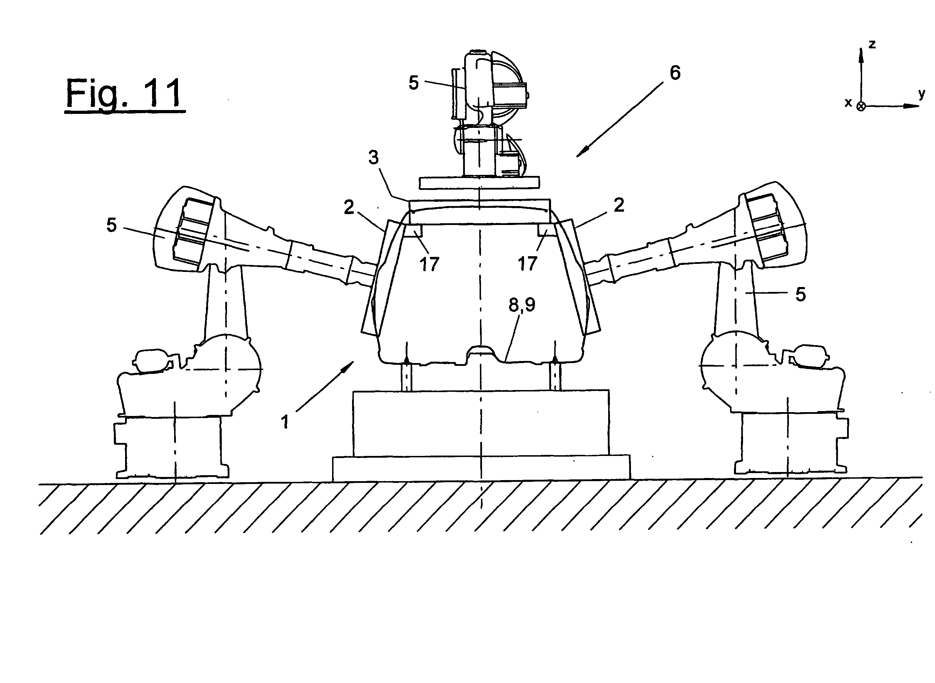

Figur 11 verdeutlicht eine Bearbeitungsstation (6), in der die Spanngeräte (2) an die Seitenteile der bereits lose vorgeheften Karosserie (8,9) mittels Robotern (5) zugeführt werden. Die Roboter (5) sind zwei beidseits der Transferlinie und des Bauteilförderers flurgebunden angeordnete Gelenkarmroboter mit sechs oder mehr Achsen. Die Spanngeräte (2) sind über geeignete Vorrichtungen und ggf. auch über Wechselkupplungen lös- und austauschbar mit den Roboterhänden verbunden.

Bei der in Figur 11 dargestellten Variante ist außerdem im Dachbereich der Karosserie (8,9) ein weiteres Spanngerät (3) vorhanden, welches Teile der Dachkonstruktion und ggf. Teile der Seitenwände der Karosserie spannt. Das Spanngerät (3) kann ebenfalls über einen Roboter (5), z.B. einen Portalroboter, zugeführt werden. Bei dieser Ausführungsform stützen sich die drei Spanngeräte (2,3) über entsprechende Abstützelemente (17) aneinander ab und sind durch geeignete eingebaute Positioniervorrichtungen miteinander verbunden und verriegelt. Die Spanngeräte (2,3) bilden hierdurch ein stabiles Spanngehäuse. Die Positionierung kann im externen Netzbezug oder auch im internen Karosseriebezug erfolgen. Hierbei werden die Spanngeräte (2,3) über geeignete Abstützungen (nicht dargestellt) gegenüber Karosseriebezugspunkten, z.B. bestimmten Karosserieöffnungen, positioniert. Die Karosseriegeräte (2,3) können in der dargestellten Lage von den Robotern (5) gehalten werden. Bei entsprechenden Abstützungen an der Karosserie (8,9) können sie auch selbsttragend sein.

In Abwandlung der gezeigten Ausführungsbeispiele ist es möglich, die Spanngeräte (2,3) mit Bauteilen (8,9) zu beladen, gleichzeitig zu spannen und dann erst über geeignete Zuführvorrichtungen (4,5) in die fügegerechte Lage zu bringen. Dies kann z.B. in einer Geostation oder Framingstation geschehen, die im Prinzip der in Figur 11 gezeigten Ausführung entspricht. Alternativ kann die Bearbeitungsstation (6) auch von beliebig anderer Natur sein und z.B. als Ausschweißstation zum Fertigschweißen der in der Framingstation vorgehefteten Karosserie dienen.

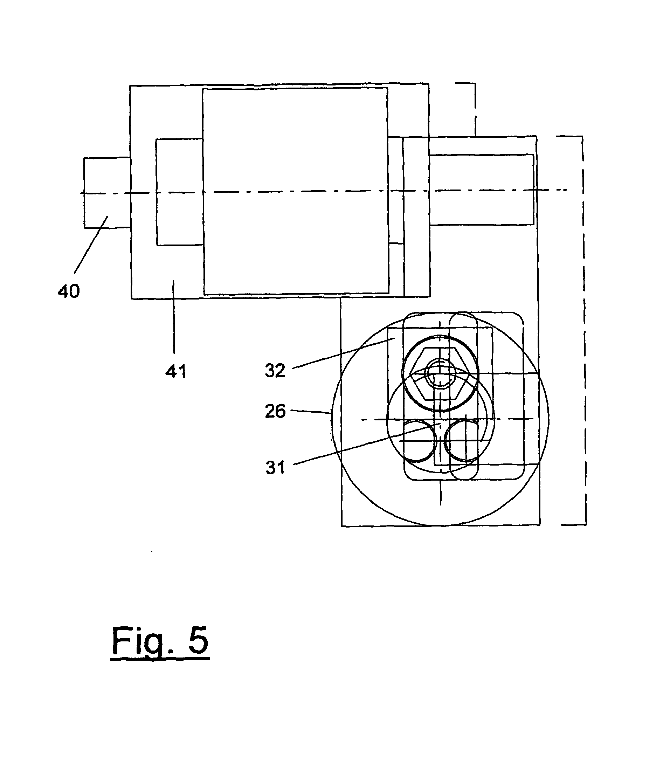

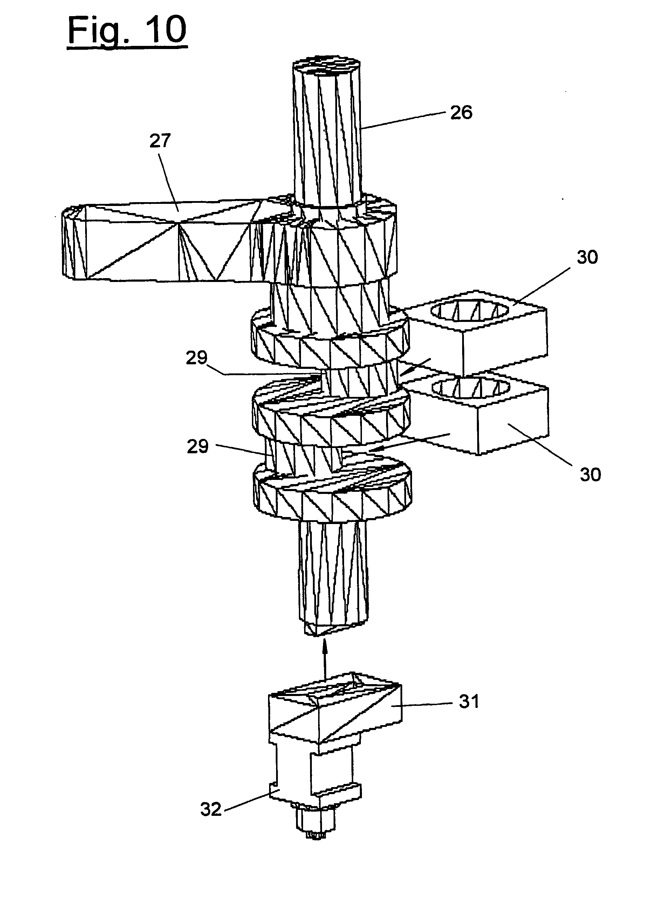

Die Spanngeräte (2,3) für den Seiten- und Dachbereich können im Prinzip gleichartig ausgebildet sein. Nachfolgend wird zur Erläuterung daher gemeinschaftlich auf das Ausführungsbeispiel der seitlichen Spanngeräte (2) gemäß Figur 1 bis 10 Bezug genommen.

Die in Figur 1 gezeigten Spanngeräte (2) bestehen jeweils aus einem rahmenartigen Gestell (12), in dem mehrere feste und bewegliche Spanneinheiten (18,19) angeordnet sind, die in ihrer Lage und Ausrichtung an den Verlauf der Bauteil-Spannkontur (11) bzw. des Bauteilflansches angepasst sind. Die Spanneinheiten (18,19) haben die Form von flachen Leisten, die am äußeren Rand jeweils mit mehreren nebeneinander angeordneten Spannsegmenten (20) besetzt sind. Diese Spannsegmente (20) an den festen und beweglichen Spanneinheiten (18,19) treten in Spannstellung mit dem Bauteilflansch (11) in Kontakt und sind hierfür entsprechend in der gewünschten Form ausgebildet und angepasst. Über die Formgebung der Spannsegmente (20) kann auch ein variabler Flanschverlauf in der Höhe, hier in der Y-Achse aufgenommen werden. Die Spannleisten (18,19) sind vorzugsweise als ebene Platten ausgebildet, wobei alternativ im mittleren Bereich ebenfalls Höhenänderungen zur Anpassung an Ausbauchungen des Bauteilflansches (11) vorhanden sein können. Die Spannleisten (18,19) haben eine vorzugsweise möglichst schmale Form, die außenseitig dem Flanschverlauf folgt und innenseitig gerade oder zur Vergrößerung des Freiraums (16) eingebaucht sein kann.

Die festen und beweglichen Spanneinheiten (18,19) sind vorzugsweise in zugeordneten Paaren vorhanden, wobei im Ausführungsbeispiel von Figur 1 vier solcher Paare hintereinander in einem geschlossenen Ring entsprechend der Bauteilöffnungskontur angeordnet sind. Die Spanngeräte (2) besitzen zudem eine Stellvorrichtung (21), welche die beweglichen Spanneinheiten (19) an den Bauteilflansch (11) zustellt und spannt.

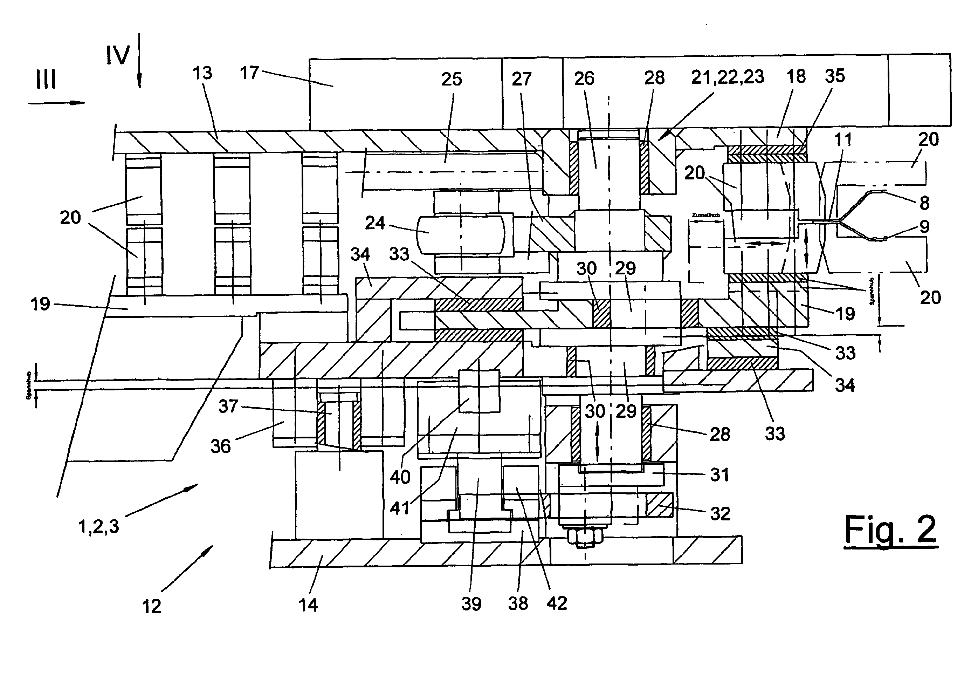

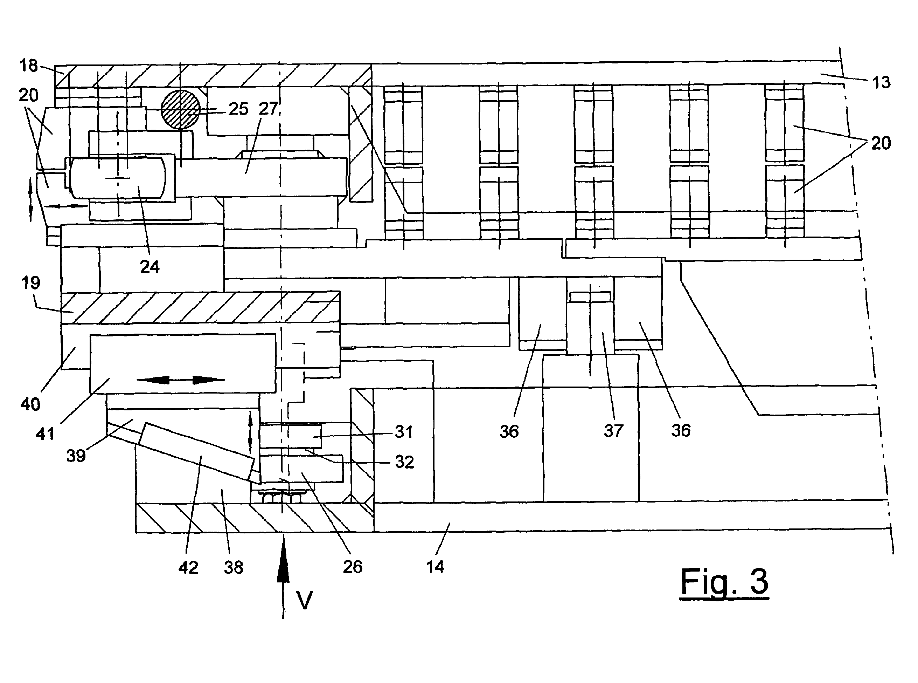

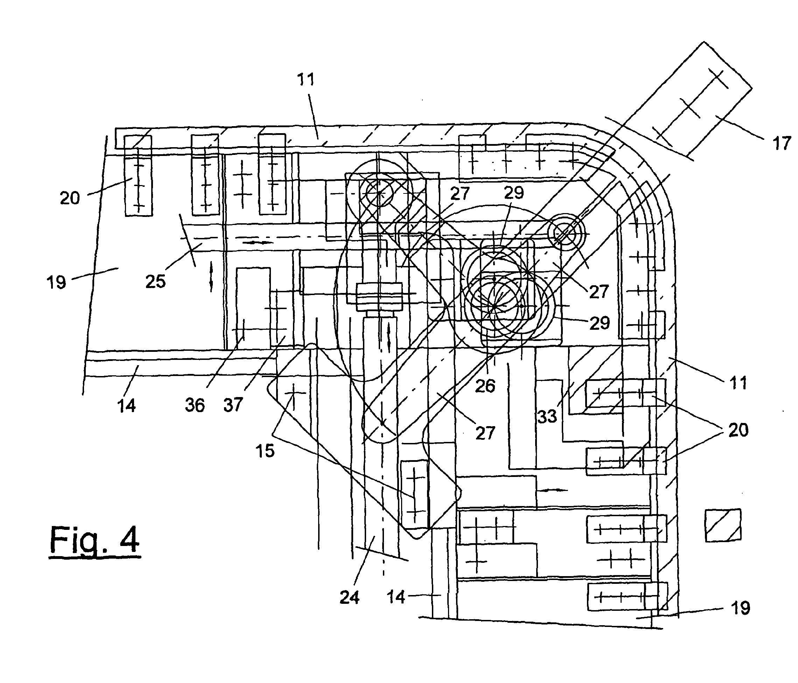

Wie Figur 2 und 3 im Querschnitt verdeutlichen, ist das Gestell (12) ebenfalls ringförmig ausgebildet und besteht aus einem Bodenteil (13) und einem Deckelteil (14), die mit Distanz und vorzugsweise parallel zueinander angeordnet sind. Sie werden durch Streben oder andere vorzugsweise dünne und außerhalb der Spanneinheiten (18,19) angeordnete Verbindungsteile (15) (vgl. Figur 4) auf Distanz gehalten und dabei starr miteinander verbunden. Auf diese Weise entsteht eine Art Sandwich-Gehäuse, welches in der Innendistanz bzw. im Freiraum die Spanneinheiten (18,19) und zumindest Teile der Stellvorrichtung (21) aufnimmt .

Die gestellfesten Spannleisten (18) sind in der gezeigten Ausführungsform dem Bodenteil (13) zugeordnet und an diesem befestigt. Sie können alternativ auch in das Bodenteil (13) integriert sein. Die beweglichen Spannleisten (19) stützen sich am Deckelteil (14) ab und sind hier in geeigneter Weise geführt. Das Gestell (12) ist gegenüber den Bauteilen (8,9) in Figur 1 derart orientiert, dass das Bodenteil (13) in Zustellrichtung hinten liegt. Das vorn liegende Deckelteil (14) wird bei der Zustellung durch die Bauteilöffnung (10) hindurch bewegt. Wie Figur 2 verdeutlicht, springt zu diesem Zweck die Außenkontur des Deckelteils (14) gegenüber dem umlaufenden Bauteilflansch (11) zurück. Desgleichen können auch die beweglichen Spannleisten (19) soweit nach innen zurückgezogen werden, dass sie mit ihren Spannsegmenten (20) in der rückwärtigen Ruhestellung außerhalb der Überdeckung mit dem Bauteilflansch (11) sind und diesen passieren können.

Bei der Zuführung der Spanngeräte (2) wird das Gestell (12) mit den gestellfesten Spannleisten (18) und deren Spannsegmenten (20) in Kontakt- und Spannposition außenseitig am Bauteilflansch (11) positioniert. Dies ist vorzugsweise zugleich die Schweiß- oder Fügeseite. Die beweglichen Spannleisten (19) werden dann aus der rückwärtigen Ruhestellung nach außen bewegt und innenseitig am Bauteilflansch (11) in Spannstellung gebracht. Dies geschieht in der gezeigten Ausführungsform durch zwei im wesentlichen quer zu einander verlaufende translatorische Bewegungen, nämlich eine im wesentlichen längs der Flanscherstreckung verlaufende Zustellbewegung und eine quer verlaufende Spannbewegung, den sogenannten Spannhub. In Figur 2, 3 und 5 sind die Zustell- und Spannhübe angegeben. Außerdem sind die Ruhestellungen der beweglichen Spannleisten (19) bzw. der Spannsegmente (20) gestrichelt dargestellt.

Die Stellvorrichtung (21) bewegt die mobilen Spanneinheiten (19) entsprechend. Vorzugsweise werden alle beweglichen Spanneinheiten (19) im Spanngerät (2) gemeinsam und gleichzeitig betätigt. Hierdurch wird umlaufend am gesamten Beaufschlagungsbereich des Bauteilflansches (11) gleichzeitig der Spannschluss hergestellt. Alternativ können die Spanneinheiten (19) auch in einer steuerbaren Abfolge nacheinander betätigt werden.

Die Stellvorrichtung (21) hat zur Betätigung der Spanneinheit (19) ein oder mehrere entsprechend geeignete Antriebe. In der gezeigten Ausführungsform besitzt sie einen kombinierten Schiebe- und Spannantrieb (22,23) für die nacheinander ablaufenden Zustell- und Spannhübe sowie die gleichzeitige Beaufschlagung aller beweglichen Spannleisten (19). Die Stellvorrichtung (21) hat hierfür einen einzelnen Antriebsmotor (24) und ein Verteilergetriebe (25). Der Antriebsmotor (24) kann in beliebig geeigneter Weise ausgebildet sein. Im gezeigten Ausführungsbeispiel handelt es sich um einen hydraulischen oder pneumatischen Zylinder.

Die im geschlossenen Ring angeordneten beweglichen Spanneinheiten (19) überlappen einander an den Stoßstellen im Kontakt- bzw. Eckbereich mit Höhenversatz und sind gegenseitig verschieblich gelagert, wobei sie sich auch aneinander abstützen und gegenseitig über Gleitplatten (33) und Deckplatten (34) mit Formschluss führen. Figur 2 verdeutlicht diese Anordnung im Querschnitt. Die jeweils unten liegenden Spannleisten (19) sind zudem über leistenförmige Führungen (36) und darin befindliche Gleitelemente (37) am Deckelteil (14) in ihrer Zustellrichtung geführt.

Um die Antriebsbewegungen auf die beweglichen Spannleisten (19) übertragen zu können, sind an den Eckbereichen und Kontakt- oder Stoßstellen der beweglichen Leisten (19) insgesamt vier parallele Exzenterwellen (26) angeordnet, die am Gestell (12) drehbar gelagert sind und sich quer zu dessen Hauptebene erstrecken. Die Exzenterwellen (26) besitzen jeweils vorzugsweise mehrarmige und quer von der Exzenterwelle (26) abstehende Betätigungshebel (27), die mit dem Verteilergetriebe (25) verbunden sind, welches vorzugsweise als Kurbeltrieb ausgebildet ist. Eine Exzenterwelle (26) ist auch mit dem Anschluss der Kolbenstange des Zylinders (24) gelenkig verbunden. Der Zylinder (24) ist am rückwärtigen Ende gelenkig am Gestell (12) gelagert. Durch den Kurbeltrieb (25) werden die Exzenterwellen (26) gleichzeitig und um gleiche Winkel gedreht. Jede bewegliche Spannleiste (19) wird hierbei an beiden Enden durch je eine Exzenterwelle (26) zugestellt und in Spannstellung gebracht.

Die Exzenterwelle (26) besitzt jeweils zwei seitlich gekröpfte, übereinander angeordnete Zustellexzenter (29), die die beiden über Eck angeschlossenen beweglichen Spannleisten (19) beaufschlagen und hierfür entsprechend der Leistenzuordnung in der Höhe und im Winkel zueinander versetzt sind. Außerdem hat die Exzenterwelle (26) einen Spannexzenter (31), durch dessen Betätigung die angeschlossene Spannleiste (19) angehoben wird, wobei sie durch die formschlüssige Führung die über Eck benachbarte andere Spannleiste (19) mitnimmt. Die Zustell- und Spannexzenter (29,31) sind vorzugsweise derart angeordnet, dass die Zustellbewegungen gleichzeitig und als erste Bewegung stattfinden und dass im Endbereich der Zustellbewegung der Spannhub erfolgt. Bei der in den Ausführungsbeispielen gezeigten Konstruktion sind hierbei relativ kurze Zustellhübe und Spannhübe von z.B. 5 mm erforderlich, die kleiner als bei den konventionellen Einzelspannern sind.

Die Zustellexzenter (29) sind von Gleitsteinen (30) umgeben, welche in entsprechenden Öffnungen an den beaufschlagten Spannleisten (19) geführt sind und die Drehbewegung des Exzenters in eine translatorische Zustellbewegung umsetzen. Um den Spannhub durchführen zu können, besteht eine Höhenbeweglichkeit und ein entsprechender Höhen- oder Dickenunterschied zwischen den Spannleisten (19) und ihren Gleitsteinen (30) oder alternativ zwischen Gleitsteinen (30) und den Zustellexzentern (29).

Der am unteren Ende der Exzenterwelle (26) angeordnete Zustellexzenter (31) wirkt ebenfalls mit einem Gleitstein (32) zusammen, der die Drehbewegung in eine translatorische Schiebebewegung umsetzt und dabei eine Spannkeilanordnung (38,39) betätigt und den Spannhub erzeugt. Auf einem gestellfesten Spannkeil (38) ist ein zweiter Spannkeil (39) mit schräger Kontaktebene beweglich gelagert, der von dem Gleitstein (32) beaufschlagt wird und entlang der Keilfläche schräg nach oben geschoben wird. Der Zusammenhalt der Spannkeile (38,39) wird durch beidseitige Übergriffsleisten (42) gesichert. Die Gleitbewegung des mobilen Spannkeils (39) wird auf einen Führungswagen (41) übertragen, der entlang einer Führungsschiene (40) an der Unterseite der beaufschlagten Spannleiste (19) translatorisch beweglich geführt ist. Durch einen entsprechenden Formschluss der Gleitsteine (30,32) mit den zugehörigen Öffnungen findet bei einer Rückwärtsdrehung der Exzenterwelle (26) der Spann- und Zustellhub in umgekehrter Richtung und Reihenfolge statt.

Wie Figur 2 verdeutlicht, sind die Spannsegmente (20) vorzugsweise als abgewinkelte Kontursteine ausgebildet, deren Spannflächen in Lage und Ausrichtung an den Flanschverlauf angepasst sind. Mittels Abstimmelementen (35), z.B. geschliffenen Shims kann die genaue Höheneinstellung der Spannsegmente (20) gegenüber ihren Spannleisten (18,19) stattfinden. Wegen der unterschiedlichen Höhenlage benachbarter beweglicher Spannleisten (19) im Eck- und Kontaktbereich sind zusätzliche Höhenausgleichsmaßnahmen vorgesehen, um eine durchgehende Spannkontur sicherzustellen.

Die Spannsegmente (20) können in einem dichten Reihenschluss entlang des Bauteilflansches (11) angeordnet sein und dabei die in Figur 2 mit durchgezogenen Strichen dargestellte und nach außen gerichtete Klauengeometrie haben. Hierbei kann ein bauteilseitiger Randbereich des Flansches (11) frei bleiben, an dem z.B. eine Lasernahtschweißung mit Anpressrolle erfolgen kann. Die Spannsegmente (20) bilden die am Spanngerät (2) am weitesten nach außen vorstehende Kontur. In Verbindung mit der flachen Gestellbauweise ist dadurch ausreichend Platz für einen Laserschweißkopf vorhanden. Außerdem gibt es keine Abschattung beim Laser-Remoteschweißen mit distanziert angeordneten Laserköpfen, bei denen der Laserstrahl per Scannereinrichtung oder durch eine Transportbewegung des Laserkopfes wandert. Dabei sind durchgehende Laserschweißnähte ohne Öffnen der Spanneinrichtung (1) möglich.

In Figur 2 ist eine Variante der Spannsegmente (20) strichpunktiert dargestellt, wobei deren Anordnung umgedreht ist, so dass sie den vorderen Rand des Bauteilflansches (11) freilassen. In einer weiteren, nicht dargestellten Variante, können die Spannsegmente (20) eine konturierte Vorderseite haben und z.B. Ausnehmungen haben, um in diesem Freibereich lasergeschweißte Strichnähte in Spannstellung zu ermöglichen. Zudem können die Spannsegmente (20) auch mit beliebigen seitlichen Abständen untereinander angeordnet sein. Ihre Ausbildung und Anordnung richtet sich grundsätzlich nach der Flanschform und den Prozesserfordernissen und lässt sich entsprechend beliebig variieren.

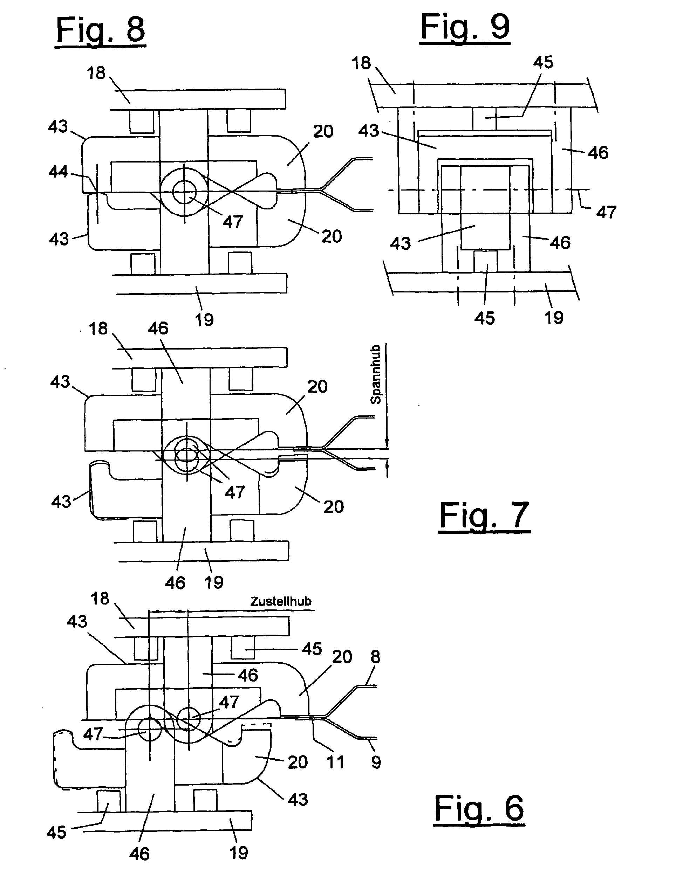

Figur 6 bis 9 zeigen eine weitere Variante in der Anordnung und Gestaltung der Spannsegmente (20). Diese sind hier an im wesentlichen U-förmigen Spannarmen (43) angeordnet, die jeweils mittels eines Schwenklagers (47) frei drehbar über abstehende Stützen (46) an den festen und beweglichen Spanneinheiten (18,19) gelagert sind. Beidseitige Stoppbolzen wirken als Lagebegrenzung (45) für die Drehbewegung der Spannarme (43). Die Spannarme (43) bilden sogenannte Klavierspanner, wobei die vorderen Armenden das Spannsegment bilden und in Spannstellung am Bauteilflansch (11) anliegen, wenn die Schwenklager (47) mit ihren Achsen fluchten. Die Drehlage wird stabilisiert durch die rückwärtigen Armenden, die ebenfalls gegeneinander stoßen und hierbei einen Gegenhalter oder Gegenanschlag (44) bilden. Die Wirkflächen der Armenden liegen hierbei mit den Drehachsen des Schwenklagers (47) und mit der Flanschmitte jeweils in einer gemeinsamen Ebene.

Wie Figur 9 als geklappte Seitenansicht von Figur 8 zeigt, übergreifen die Spannarme (43) und die Stützen (46) einander in Spannstellung und haben hierzu entsprechende Aussparungen und Vorsprünge. Bei dieser Ausgestaltung liegen die Spannsegmente (20) an den festen und beweglichen Spannleisten (18,19) seitlich in Flanschlängsrichtung versetzt nebeneinander. Dies ist grundsätzlich auch bei der vorbeschriebenen Anordnung von Figur 2 bis 5 möglich.

Bei der Variante von Figur 6 bis 9 zeigt Figur 6 die Ausgangsstellung der Spannarme (43) vor Beginn des Zustellhubs. Die bewegliche Spannleiste (19) nimmt hierbei die vorbeschriebene zurückgezogene Ruhestellung ein. Die über die Lagebegrenzung (45) zugelassenen Drehverstellungen der Schwenkarme (43) sind gestrichelt dargestellt. Figur 7 zeigt die Folgestellung nach Beendigung des Zustellhubs der beweglichen Spannleiste (19). Die Schwenklager (47) und die Schwenkarme (43) liegen nun in Spannhubrichtung fluchtend untereinander, wobei aus dieser Stellung der Spannhub der beweglichen Spannleisten (19) in die Endstellung gemäß Figur 8 und 9 erfolgt.

In Abwandlung der gezeigten Ausführungsformen können bei abgewinkelten oder schräg stehenden Bauteilflanschen (11) die Schwenkarme (43) entsprechend reagieren und sich ebenfalls schräg stellen.

Abwandlungen der gezeigten und beschriebenen Ausführungsformen sind in verschiedener Weise möglich.

Zum einen können die Spanngeräte (2,3) nach der Beendigung des ersten Bearbeitungsprozesses an den Bauteilen (8,9) verbleiben und mit diesen in die nächste Bearbeitungsstation bewegt werden.

In einer weiteren Variante können die beweglichen Spannleisten (19) und/oder ihre Spannsegmente (20) in einer Schwenkbewegung zugestellt und in Spannstellung gebracht werden. Zudem sind beliebige andere Zustell- und Spannbewegungen möglich.

Ferner ist es möglich, in den Spanneinheiten (18,19) und gegebenenfalls auch an den Spannsegmenten (20) Zusatzeinrichtungen unterzubringen, wie z.B. Schutzgas- oder Absaugeinrichtungen. Diese können in die Spannsegmente (20) integriert oder alternativ außen an diesen Spannsegmenten (20) angeordnet sein. Z.B. können Schutzgasleitungen außenseitig an den Spannsegmenten (20) verlegt und mittels geeigneter Clipsverbindungen oder dgl. lösbar befestigt sein. Die Schutzgasleitungen können an den benötigten Stellen Mantelöffnungen, Düsen oder dgl. für den gezielten Gasaustritt haben.

Ferner können die Spanngeräte (2,3) Teile der Füge- und Bearbeitungstechnik sein, indem sie z.B. elektromagnetische Induktoren zum Beheizen mittels hochfrequenter Wechselfelder beinhalten, wobei Dichtungsmittel, Klebstoffe oder dergleichen ausgehärtet werden können. Eine solche Verbindungstechnik kann anstelle der bisher üblichen Schweißtechnik zum Klebeverbinden der Bauteile (8,9) eingesetzt werden. Die Spanngeräte (2,3) können dann in einem Arbeitsgang Spannen und Kleben. Ein längerer Verbleib der Spanngeräte (2,3) in Spannstellung an den Bauteilen (8,9) und ein Mitführen beim Weitertransport ist dabei vorteilhaft

In einer weiteren Abwandlung können an den Spanngeräten (2,3) Kühleinrichtungen angebracht sein, die z.B. beim Schweißen für eine gezielte Bauteilkühlung und Wärmeabfuhr sorgen.

Zudem können die Spannsegmente (20) eine den Bauteilflansch (11) verformende Höhenkontur haben, mit der z.B. Prägestellen am Bauteilflansch (11) eingebracht werden, um Freiräume für das Ausgasen von beschichteten Blechen beim-Schweißen zu bilden.

In der gezeigten Ausführungsform spannen die Spanngeräte (2,3) einen innen liegenden Bauteilflansch (11) an Bauteilöffnungen (10). Diese Zuordnung kann auch umgekehrt sein, wobei die Bauteile (8,9) wie im nachfolgend näher geschilderten Beispiel von Figur 17 mindestens einen außenseitigen Bauteilflansch (11) haben, der im wesentlichen gerade verlaufen und/oder zumindest bereichsweise über Eck oder über einen Bogenbereich umlaufen kann. In diesen Fällen sind die Spanngeräte (2,3) in ihrer Form entsprechend angepasst und bilden z.B. einen außenseitigen bogenförmigen Kragen oder Ring, der die Bauteile (8,9) zumindest bereichsweise umgibt, wobei die Spannsegmente (20) an der Innenseite angeordnet sind. Auch bei Bauteilöffnungen (10) kann das Spanngerät (2,3) bogenförmig gestaltet sein und sich nur über einen Teilbereich des Öffnungsumfangs erstrecken. Grundsätzlich können die Spanngeräte (2,3) in ihrer Formgebung an beliebige Verläufe und Konturen von Bauteilen (8,9) und Bauteil-Spannkonturen (11) angepasst sein. Die Bauteil-Spannkonturen können in beliebig geeigneter Weise ausgestaltet sein und müssen nicht in der vorbeschriebenen Flanschform vorliegen.

Weitere Abwandlungen sind hinsichtlich der Ausgestaltung der Einzelteile der Spanngeräte (2,3) möglich. Dies betrifft sowohl die Form und Ausbildung des Gestells (12), als auch die festen und beweglichen Spanneinheiten (18,19) und die Stellvorrichtung (21). Letztere kann z.B. getrennte Antriebseinheiten für Zustell- und Spannhub besitzen. Der Spannhub kann ferner mit einer anderen Kinematik, z.B. über ein Steilgewinde an der Exzenterwelle mit einer zugehörigen Kulisse, bewirkt werden.

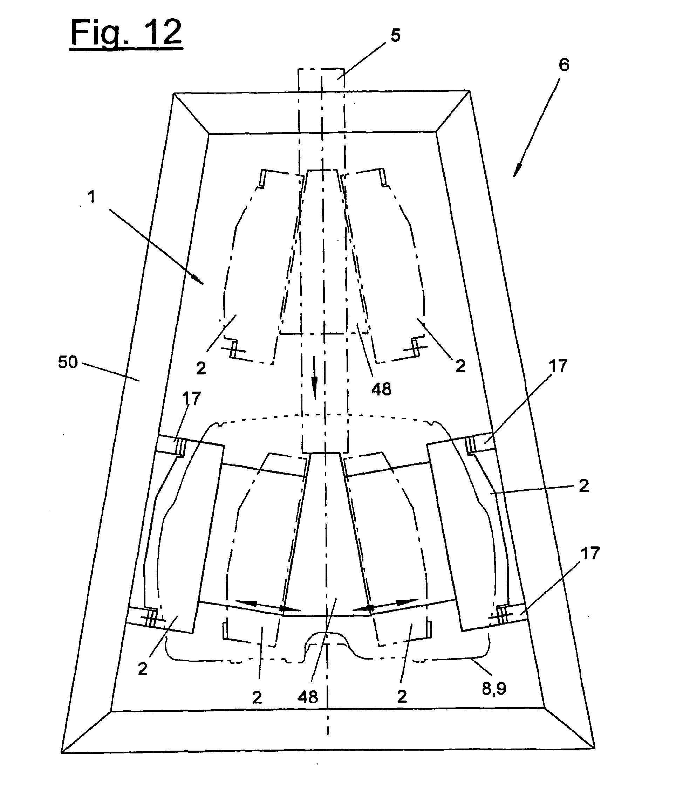

Figur 12 bis 16 zeigen Varianten in der Zustellvorrichtung (4,5) für ein oder mehrere Spanngeräte (2).

Figur 12 zeigt in Frontansicht eine Bearbeitungsstation (6) mit einer Zustellvorrichtung (5), die für eine Innenzustellung von ein oder mehreren Spanngeräten (2) vorgesehen ist, die z.B. an zwei Seitenwände (8,9) durch die Dachöffnung von oben und von der Innenseite her zugestellt werden. Die Zustellvorrichtung (5) ist in dieser Variante als Hubvorrichtung mit einem Stempel und einem Halter (48) für ein oder mehrere Spanngeräte (2) ausgebildet. Die Hubvorrichtung (5) kann außerdem Zusatzachsen, z.B. eine Längsbeweglichkeit, aufweisen. Sie ist in geeigneter Weise in der Bearbeitungsstation (6) gelagert, z.B. an einem Stationsgestell (50). Der Halter (48) hat ein oder mehrere Zusatzachsen, mit denen er die aufgenommenen Spanngeräte (2) seitlich bewegen und an die Seitenwände (8,9) zustellen kann.

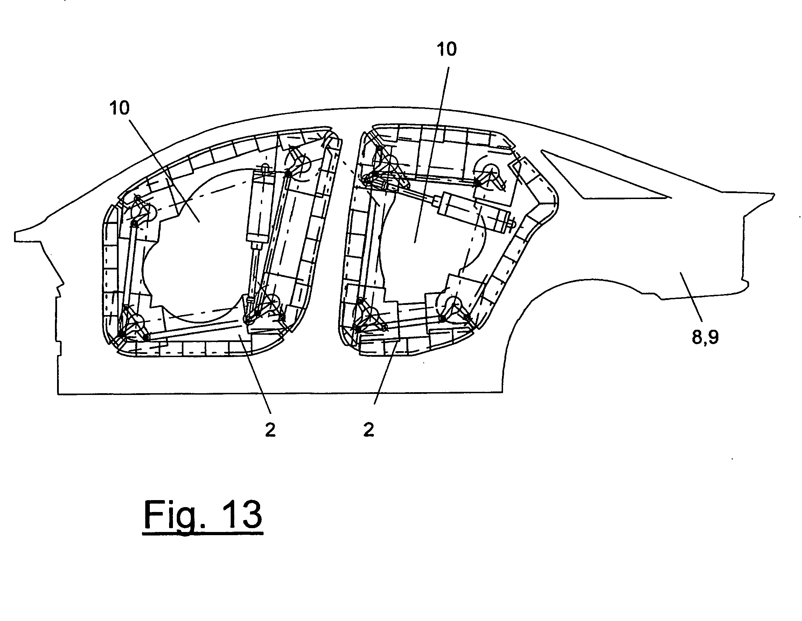

In der angehobenen Anfangsposition ist der Halter (48) eingefahren, so dass er mit seinen zwei oder vier beidseitig angehängten Spanngeräten (2) die Dachöffnung bzw. den Freiraum zwischen zwei einzeln gehaltenen Seitenwänden (8,9) passieren kann. Im Karosserieinnenraum angelangt, fährt der Halter (48) seitlich aus oder spreizt sich, wobei er die gehaltenen Spanngeräte (2) an die Seitenwände (8,9) zustellt. Hierbei können die Spanngeräte (2) in Betriebsstellung eine außenseitige Fixierung durch Klemmen, Halter oder dergleichen am Stationsgestell (50) erhalten. Figur 13 zeigt die zugehörige Position der Spanngeräte (2) in den zwei Türausschnitten (10) einer Seitenwand (8,9) bei Innenzustellung. Das Deckelteil (14) ist hierbei nicht dargestellt.

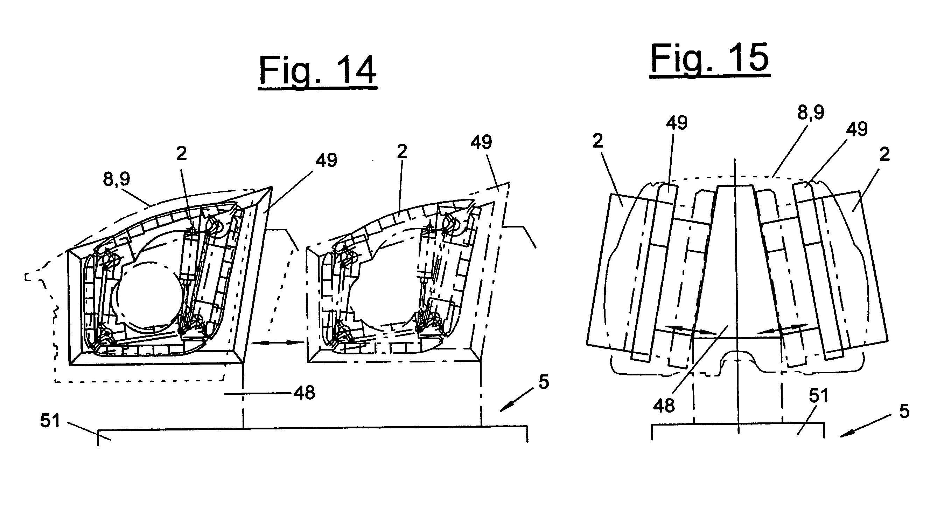

In der Variante von Figur 14 und 15 erfolgt ebenfalls eine Innenzustellung von ein oder mehreren Spanngeräten (2) an zwei beabstandete Seitenwände (8,9) einer Fahrzeugkarosserie. Die Zustellrichtung ist diesmal axial in Richtung der X-Achse der Bearbeitungsstation. Die Zustellvorrichtung (5) kann in diesem Fall ein geeigneter Förderer (51), z.B. ein Fahrwagen oder dergleichen, sein, auf dem wiederum ein geeigneter Halter (48) für ein oder mehrere Spanngeräte (2) angeordnet ist. Durch die Seitenbeweglichkeit und die Zusatzachsen des Halters (48) können die zunächst mit schmaler Kontur eingefahrenen Spanngeräte (2) dann nach außen gespreizt und zugestellt werden.

Wie Figur 14 und 15 weiter verdeutlichen, können die Spanngeräte (2) ihrerseits an Zwischenträgern und insbesondere an standardisierten Zuführmodulen (49) angeordnet sein. Dies bietet eine Standardisierungsmöglichkeit für den Halter (48), wobei lediglich die Zuführmodule (49) an die jeweilige Spanngerätegeometrie angepasst werden und mitsamt den Spanngeräten (2) ausgetauscht werden können.

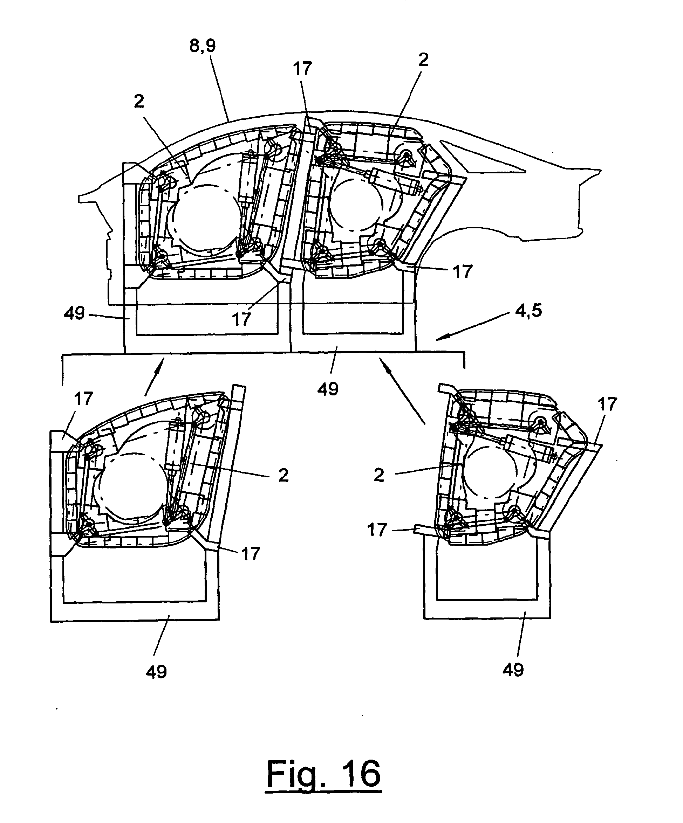

In der Variante von Figur 16 kann die Zustellvorrichtung (4) ein Spannrahmen sein, der anhand der vorerwähnten Zuführmodule (49) modular aufgebaut wird. Hierfür können die Zuführmodule (49) durch geeignete Fixierungen oder Abstützungen (17) untereinander starr oder lösbar verbunden sein. Insbesondere können hier auch automatische Wechseleinheiten Verwendung finden. Die Spanngeräte (2) sind ihrerseits über geeignete Abstützungen (17) mit den Zuführmodulen oder Spannrahmenmodulen (49) verbunden.

Figur 17 verdeutlicht die vorerwähnte Variante einer Außenspannung von Bauteilflanschen (11). Hierbei werden z.B. die linken und rechten Bauteilflansche (11) der zentralen B-Säule (53) der Karosserieseitenwand (8,9) gespannt. Die Spannkontur kann sich ggf. auch teilweise in den anschließenden Dach- und Schwellerbereich erstrecken. Das Spanngerät (2) besitzt hierfür ein mehrteiliges rahmenartiges Gestell (12), welches zwei distanzierte leistenförmige Gestellteile (54,55) für jeweils einen Bauteilflansch (11) und ein oder mehrere verbindende Gestellteile (56), z.B. Verbindungsbügel aufweist. Jedes der Gestellteile (54,55) besitzt dabei zwei Spanneinheiten (18,19) in der vorbeschriebenen Ausführungsform mit festen und beweglichen Spannleisten und mit mehreren Spannsegmenten (20).

Figur 17 verdeutlicht weitere Varianten der vorbeschriebenen Ausführungsformen. Zum einen betrifft dies die Zuführung und Halterung des Spanngeräts (2). Dieses kann z.B. manuell von einem Werker zugeführt und am Bauteil (7,8) positioniert werden. Hierzu kann z.B. das Spanngerät (2) an einem Tragarm, einem sog. Balancer (nicht dargestellt), seitenbeweglich hängen und mit einem Gegengewicht ausbalanciert sein. Der Werker schiebt das Spanngerät (2) mit zurückgezogenen beweglichen Spanneinheiten (19) an das Bauteil (8,9), z.B. die in Figur 17 gezeigte B-Säule (53), und betätigt dann den Spannantrieb (23). Die Positionierung des Spanngeräts (2) kann z.B. über Indexe oder andere Positioniereinrichtungen an den Verbindungsbügeln (56) geschehen, die in Eingriff mit entsprechenden Positionieröffnungen oder anderen Fixpunkten (nicht dargestellt) an der B-Säule (53) treten. In der Spannstellung verriegelt sich das Spanngerät (2) selbst an den Bauteilflanschen (11) und ist am Bauteil (8,9) abgestützt. Die Abstützung kann über die Spannkontur oder ggf. auch über die Positioniereinrichtung erfolgen.

Figur 17 verdeutlicht auch eine Variante in der Ausbildung des Spannantriebs (23). Dieser kann z.B. aus einem Handantrieb (52), insbesondere der dargestellten Ratsche, bestehen. Sie kann z.B. auf einer Exzenterwelle (26) angeordnet sein, wobei eine formschlüssige Drehverbindung mittels eines lösbaren Sechskants oder dergleichen besteht. Die drehende Antriebsbewegung kann über ein Verteilergetriebe (25) auf die zweite oder evtl. weitere Exzenterwellen (26) übertragen werden.

In Abwandlung des eingangs beschriebenen Ausführungsbeispiels von Figur 1 bis 5 kann der Spannantrieb (23) in einer nicht dargestellten Variante unter Wegfall des Zylinders (24) von der Zuführvorrichtung (5), insbesondere einem Roboter, übernommen werden. Nach der Zustellung des Spanngeräts (2,3) und dessen Fixierung löst sich der mit einer Wechselkupplung ausgerüstete Roboter (5) vom Spanngerät (2) und betätigt mit einem geeigneten Drehwerkzeug ein oder mehrere Exzenterwellen (26). Das Drehwerkzeug kann vom Roboter (5) aus einem Magazin gegriffen werden oder kann sich alternativ an der Roboterhand befinden.

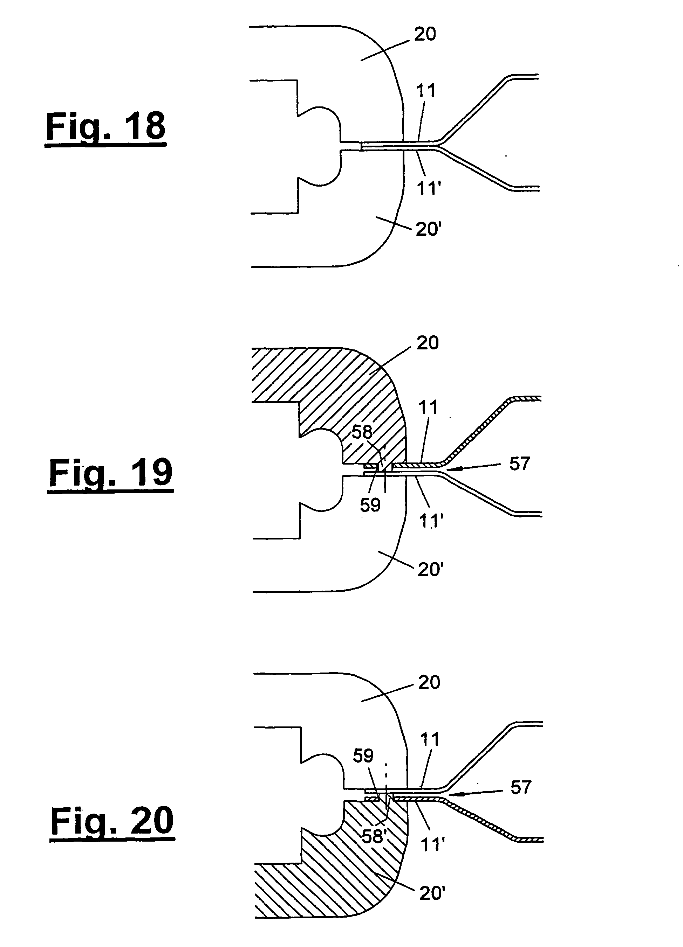

Figur 18 bis 20 zeigen verschiedene Spannsituationen für Bauteilränder oder -flansche (11,11'). In der Variante von Figur 18 liegen die Bauteilflansche (11,11') plan aufeinander und werden in Kontaktstellung gespannt. Dies entspricht z.B. der in Figur 6 bis 9 gezeigten Ausführung.

In der Variante von Figur 19 und 20 ist in der Spannstellung die Bildung eines Spaltes (57) zwischen den Bauteilflanschen (11,11') möglich. Hierfür sind z.B. an den Spannsegmenten (20,20') abwechselnd vorstehende Stifte (58,58') angeordnet, die durch entsprechende Flanschöffnungen (59) des jeweils zugeordneten und benachbarten Bauteilflansches (11,11') ragen. In Figur 19 drückt der am oberen schraffierten Spannsegment (20) angeordnete Stift (58) auf den gegenüber liegenden unteren Bauteilflansch (11') und presst diesen gegen die Anlagefläche des unteren Spannsegments (20'). Figur 20 verdeutlicht die Spannsituation an einer anderen Stelle der Spannkontur, wo der hochragende Stift (58') am unteren schraffierten Spannsegment (20') den gegenüber liegenden Bauteilflansch (11) gegen die Anlagefläche des oberen Spannsegments (20) presst. Die Länge der Stifte (58,58') ist größer als die Dicke des durchdrungenen Bauteilflansches (11,11'), so dass durch das Stiftübermaß der besagte Spalt (57) in der gewünschten Größe entsteht. Durch mehrere entlang der Spannkontur abwechselnd angeordnete gegenläufige Stifte (58,58') können beide Bauteilflansche (11,11') fest und sicher gespannt und zugleich auf das gewünschte Spaltmaß gebracht werden.

### BEZUGSZEICHENLISTE

- 1: Spanneinrichtung
- 2: Spanngerät für Seitenbereich
- 3: Spanngerät für Dachbereich
- 4: Zuführvorrichtung, Spannrahmen
- 5: Zuführvorrichtung, Roboter
- 6: Bearbeitungsstation
- 7: Bearbeitungswerkzeug
- 8: Bauteil, Karosserieteil
- 9: Bauteil, Karosserieteil
- 10: Bauteilöffnung
- 11: Bauteilflansch, Spannkontur, Bauteilrand
- 11': Bauteilflansch,Bauteilrand
- 12: Gestell, Gehäuse
- 13: Bodenteil fest
- 14: Deckelteil
- 15: Verbindungsteil
- 16: Freiraum
- 17: Abstützung
- 18: Spanneinheit, Spannleiste fest
- 19: Spanneinheit, Spannleiste beweglich
- 20: Spannsegment
- 20': Spannsegment
- 21: Stellvorrichtung
- 22: Zustellantrieb
- 23: Spannantrieb
- 24: Antriebsmotor, Zylinder
- 25: Verteilergetriebe, Kurbeltrieb
- 26: Exzenterwelle
- 27: Betätigungshebel
- 28: Lager
- 29: Zustellexzenter
- 30: Gleitstein für Leistenzustellung
- 31: Spannexzenter
- 32: Gleitstein für Spannexzenter
- 33: Gleitplatte für Leistenführung
- 34: Deckplatte für Leistenführung
- 35: Abstimmelement, Shim
- 36: Führung für Zustellung
- 37: Gleitelement für Zustellung
- 38: Spannkeilanordnung, Spannkeil fest
- 39: Spannkeilanordnung, Spannkeil beweglich
- 40: Führungsschiene für Spannkeil
- 41: Führungswagen für Spannkeil
- 42: Übergriffleiste
- 43: Spannarm
- 44: Gegenhalter, Gegenanschlag
- 45: Lagebegrenzung
- 46: Stütze
- 47: Schwenklager
- 48: Halter
- 49: Zuführmodul, Spannrahmenmodul
- 50: Gestell, Stationsgestell
- 51: Förderer
- 52: Handantrieb, Ratsche
- 53: Bauteilelement, B-Säule
- 54: Gestellteil, Leiste
- 55: Gestellteil, Leiste
- 56: Gestellteil, Bügel
- 57: Spalt
- 58: Stift
- 58': Stift
- 59: Flanschöffnung

## Patentansprüche

1. Spanneinrichtung für Bauteile (8,9), insbesondere Karosseriebauteile, mit einer Bauteil-Spannkontur (11), insbesondere einem Bauteilflansch, **dadurch gekennzeichnet, dass** die Spanneinrichtung (1) ein oder mehrere Spanngeräte (2,3) aufweist, die jeweils ein rahmenartiges Gestell (12) mit darin angeordneten mehreren Paaren von festen und beweglichen, an den Verlauf der Bauteil-Spannkontur (11) angepassten leistenartigen Spanneinheiten (18,19) mit mehreren Spannsegmenten (20) sowie eine Stellvorrichtung (21) besitzen, welche die bewegliche(n) Spanneinheit(en) (19) an die Bauteil-Spannkontur (11) zustellt und spannt.

2. Spanneinrichtung nach Anspruch 1, **dadurch gekennzeichnet, dass** die Paare von Spannneinheiten (18,19) hintereinander in Leistenform oder in einem offenen oder zum Ring geschlossenen Bogen angeordnet sind.

3. Spanneinrichtung nach Anspruch 1 oder 2, **dadurch gekennzeichnet, dass** die Stellvorrichtung (21) die beweglichen Spannneinheiten (19) gemeinsam in einer steuerbaren Abfolge, vorzugsweise gleichzeitig betätigt.

4. Spanneinrichtung nach Anspruch 1, 2 oder 3, **dadurch gekennzeichnet, dass** die beweglichen Spanneinheiten (19) zwischen einer vorderen Spannstellung und einer rückwärtigen Ruhestellung bewegbar sind, wobei sie in der Ruhestellung außer Überdeckung mit der Bauteil-Spannkontur (11) sind.

5. Spanneinrichtung nach einem der vorhergehenden Ansprüche, **dadurch gekennzeichnet, dass** die beweglichen Spanneinheiten (19) in zwei im wesentlichen quer zueinander verlaufenden Richtungen translatorisch bewegbar sind.

6. Spanneinrichtung nach einem der vorhergehenden Ansprüche, **dadurch gekennzeichnet, dass** das Gestell (12) bogen- oder ringförmig ausgebildet ist und ein Boden- und ein Deckelteil (13,14) aufweist, die voneinander distanziert angeordnet und durch Verbindungsteile (15) starr miteinander verbunden sind, wobei zwischen den Teilen die Spanneinheiten (18,19) und Teile der Stellvorrichtung (21) angeordnet sind.

7. Spanneinrichtung nach einem der vorhergehenden Ansprüche, **dadurch gekennzeichnet, dass** einander benachbarte beweglichen Spanneinheiten (19) an den Stoßstellen mit Höhenversatz überlappen und gegenseitig verschieblich gelagert sind.

8. Spanneinrichtung nach einem der vorhergehenden Ansprüche, **dadurch gekennzeichnet, dass** die Stellvorrichtung (21) einen kombinierten Schiebe- und Spannantrieb (22,23) aufweist.

9. Spanneinrichtung nach einem der vorhergehenden Ansprüche, **dadurch gekennzeichnet, dass** die Stellvorrichtung (21) einen integrierten oder externen motorischen oder manuellen Antrieb (24,52), vorzugsweise einen Zylinder, mit einem Verteilergetriebe (25) zur gemeinsamen Beaufschlagung der beweglichen Spanneinheiten (19) aufweist.

10. Spanneinrichtung nach einem der vorhergehenden Ansprüche, **dadurch gekennzeichnet, dass** der kombinierte Schiebe- und Spannantrieb (22,23) mehrere jeweils an den Stoßstellen der Spanneinheitenpaare (18,19) angeordnete Exzenterwellen (26) mit Zustell- und Spannexzentern (29,31) in unterschiedlichen Höhen aufweist.

11. Spanneinrichtung nach einem der vorhergehenden Ansprüche, **dadurch gekennzeichnet, dass** die Exzenterwellen (26) mehrarmige Betätigungshebel (27) zur Verbindung mit dem Antrieb (24) oder dem Verteilergetriebe (25) aufweisen.

12. Spanneinrichtung nach einem der vorhergehenden Ansprüche, **dadurch gekennzeichnet, dass** die Zustellexzenter (29) mittels Gleitsteinen (30) mit den benachbarten beweglichen Spanneinheiten (19) verbunden sind und die zustellende Schiebebewegung ausführen.

13. Spanneinrichtung nach einem der vorhergehenden Ansprüche, **dadurch gekennzeichnet, dass** der Spannexzenter (31) mittels Gleitstein (32) mit einer Spannkeilanordnung (38,39) zur Erzeugung der gemeinsamen Spannbewegung der benachbarten beweglichen Spanneinheiten (19) verbunden ist.

14. Spanneinrichtung nach einem der vorhergehenden Ansprüche, **dadurch gekennzeichnet, dass** die Spanneinrichtung (1) ein oder mehrere Zuführvorrichtungen (4,5) für das oder die Spanngerät(e) (2,3) aufweist.

15. Spanneinrichtung nach einem der vorhergehenden Ansprüche, **dadurch gekennzeichnet, dass** das Spanngerät (2,3) mindestens eine Abstützung (17) zur Verbindung mit der Zuführvorrichtung (4,5) oder zur Fixierung in der Arbeitsposition aufweist.

16. Spanneinrichtung nach einem der vorhergehenden Ansprüche, **dadurch gekennzeichnet, dass** mehrere Spanngeräte (2,3) ein oder mehrere Abstützung (17) zur gegenseitigen Verbindung in Reihen- oder Winkelanordnung aufweisen.

17. Spanneinrichtung nach einem der vorhergehenden Ansprüche, **dadurch gekennzeichnet, dass** die Zuführvorrichtung (5) einen Halter (48) mit mindestens einer Zusatzachse zur Aufnahme von mehreren Spanngeräten (2) und für deren Innenzustellung an außenseitig positionierte Bauteile (8,9) aufweist.

18. Spanneinrichtung nach einem der vorhergehenden Ansprüche, **dadurch gekennzeichnet, dass** die Spanngeräte (2) an standardisierten Zuführmodulen (49) angeordnet sind.

19. Spanneinrichtung nach einem der vorhergehenden Ansprüche, **dadurch gekennzeichnet, dass** mehrere Zuführmodule (49) untereinander zur Bildung eines modularen Spannrahmens (4) verbindbar sind.

20. Spanneinrichtung nach einem der vorhergehenden Ansprüche, **dadurch gekennzeichnet, dass** die Spannsegmente (20,20') abwechselnd vorstehende Stifte (58,58') aufweisen, die mit entsprechenden Flanschöffnungen (59) an den zugeordneten Bauteilflanschen (11,11') im Eingriff stehen.

21. Bearbeitungsstation mit mindestens einer Spanneinrichtung (1) nach einem der vorhergehenden Ansprüche, **dadurch gekennzeichnet, dass** die Bearbeitungsstation (6) als Framing- oder Ausschweißstation für Fahrzeugrohkarosserien (8,9) ausgebildet ist.

## Claims

1. Clamping mechanism for components (8, 9), in particular vehicle body components, with a component clamping contour (11), in particular a component flange, **characterized in that** the clamping mechanism (1) has one or more clamping devices (2, 3), which each have a frame-like structure (12) with a number of pairs of fixed and movable strip-like clamping units (18, 19) arranged therein, which are adapted to the path followed by the component clamping contour (11) and have a number of clamping segments (20), and also a positioning device (21), which sets the movable clamping unit(s) (19) against the component clamping contour (11) and clamps it or them.

2. Clamping mechanism according to Claim 1, **characterized in that** the pairs of clamping units (18, 19) are arranged one behind the other in strip form or in an open arc or an arc closed to form a ring.

3. Clamping mechanism according to Claim 1 or 2, **characterized in that** the positioning device (21) actuates the movable clamping units (19) together in a controllable sequence, preferably simultaneously.

4. Clamping mechanism according to Claim 1, 2 or 3, **characterized in that** the movable clamping units (19) can be moved between a front clamping position and a rear rest position, in which they are not congruent with the component clamping contour (11).

5. Clamping mechanism according to one of the preceding claims, **characterized in that** the movable clamping units (19) can be moved in a translatory manner in two directions running substantially transversely in relation to each other.

6. Clamping mechanism according to one of the preceding claims, **characterized in that** the structure (12) is formed as an arc or ring and has a bottom part (13) and a top part (14), which are arranged at a distance from each other and are rigidly connected to each other by connecting parts (15), the clamping units (18, 19) and parts of the positioning device (21) being arranged between the parts.

7. Clamping mechanism according to one of the preceding claims, **characterized in that** adjacent movable clamping units (19) overlap at the joints with vertical offset and are mounted displaceably with respect to one another.

8. Clamping mechanism according to one of the preceding claims, **characterized in that** the positioning device (21) has a combined pushing and clamping drive (22, 23).

9. Clamping mechanism according to one of the preceding claims, **characterized in that** the positioning device (21) has an integrated or external motorized or manual drive (24, 52), preferably a cylinder, with a power divider (25) for acting jointly on the movable clamping units (19) .

10. Clamping mechanism according to one of the preceding claims, **characterized in that** the combined pushing and clamping drive (22, 23) has a number of eccentric shafts (26), respectively arranged at the joints of the pairs of clamping units (18, 19), with positioning and clamping eccentrics (29, 31) at different heights.

11. Clamping mechanism according to one of the preceding claims, **characterized in that** the eccentric shafts (26) have multi-arm actuating levers (27) for connection to the drive (24) or the power divider (25).

12. Clamping mechanism according to one of the preceding claims, **characterized in that** the positioning eccentrics (29) are connected by means of sliding members (30) to the adjacent movable clamping units (19) and perform the positioning pushing movement.

13. Clamping mechanism according to one of the preceding claims, **characterized in that** the clamping eccentric (31) is connected by means of a sliding member (32) to a clamping wedge arrangement (38, 39) for producing the joint clamping movement of the adjacent movable clamping units (19).

14. Clamping mechanism according to one of the preceding claims, **characterized in that** the clamping mechanism (1) has one or more feeding devices (4, 5) for the clamping device or devices (2, 3).

15. Clamping mechanism according to one of the preceding claims, **characterized in that** the clamping device (2, 3) has at least one support (17) for connection to the feeding device (4, 5) or for fixing in the working position.

16. Clamping mechanism according to one of the preceding claims, **characterized in that** a number of clamping devices (2, 3) have one or more supports (17) for mutual connection in a serial or angled arrangement.

17. Clamping mechanism according to one of the preceding claims, **characterized in that** the feeding device (5) has a holder (48) with at least one additional axis for receiving a number of clamping devices (2) and for their inward positioning against externally positioned components (8, 9).

18. Clamping mechanism according to one of the preceding claims, **characterized in that** the clamping devices (2) are arranged on standardized feeding modules (49).

19. Clamping mechanism according to one of the preceding claims, **characterized in that** a number of feeding modules (49) can be connected to one another to form a modular clamping frame (4).

20. Clamping mechanism according to one of the preceding claims, **characterized in that** the clamping segments (20, 20') have alternately protruding pins (58, 58'), which are in engagement with corresponding flange openings (59) on the assigned component flanges (11, 11').

21. Machining station with at least one clamping device (1) according to one of the preceding claims, **characterized in that** the machining station (6) is formed as a framing or welding station for vehicle body shells (8, 9).

## Revendications

1. Dispositif de blocage pour des éléments de construction (8, 9), notamment pour des éléments de carrosserie, ayant un contour de blocage pour éléments de construction (11), notamment une bride pour éléments de construction, **caractérisé en ce que** le dispositif de blocage (1) comporte un ou plusieurs appareils de blocage (2, 3) qui comprennent respectivement un châssis du type d'un cadre (12) dans lequel sont disposées plusieurs paires d'unités de blocage (18, 19), fixes et mobiles, du type de baguettes, à plusieurs segments de blocage (20), adaptées au trajet du contour de blocage pour éléments de construction, ainsi qu'un dispositif d'actionnement (21) qui apporte la (les) unité(s) de blocage mobile(s) (19) au contour de blocage pour éléments de construction (11) et qui les bloque.

2. Dispositif de blocage selon la revendication 1, **caractérisé en ce que** les paires d'unités de blocage (18, 19) sont disposées les unes derrière les autres sous la forme d'une baguette ou en un arc ouvert ou fermé en anneau.

3. Dispositif de blocage selon la revendication 1 ou 2, **caractérisé en ce que** le dispositif d'actionnement (21) actionne de préférence simultanément les unités de blocage mobiles (19) en commun, au cours d'une séquence pouvant être commandée.

4. Dispositif de blocage selon la revendication 1, 2 ou 3, **caractérisé en ce que** les unités de blocage mobiles (19) peuvent être déplacées entre une position de blocage antérieure et une position de repos postérieure, sachant qu'en position de repos, elles ne se recouvrent pas avec le contour de blocage pour l'élément de construction (11).

5. Dispositif de blocage selon l'une quelconque des revendications précédentes, **caractérisé en ce que** les unités de blocage mobiles (19) peuvent être déplacées en translation dans deux directions sensiblement transversales l'une par rapport à l'autre.

6. Dispositif de blocage selon l'une quelconque des revendications précédentes, **caractérisé en ce que** le châssis (12) est conçu sous la forme d'un arc ou d'un anneau et comporte une partie fond et une partie couvercle (13, 14) qui sont disposées à distance mutuelle et qui sont reliées entre elles de façon rigide par des éléments de liaison (15), les unités de blocage (18, 19) et des éléments du dispositif d'actionnement (21) étant disposés entre les parties.

7. Dispositif de blocage selon l'une quelconque des revendications précédentes, **caractérisé en ce que** des unités de blocage mobiles (19) voisines se chevauchent aux points de jonction avec un déport en hauteur et sont montées coulissantes les unes par rapport aux autres.

8. Dispositif de blocage selon l'une quelconque des revendications précédentes, **caractérisé en ce que** le dispositif d'actionnement (21) comporte un entraînement combiné en coulissement et en blocage (22, 23).

9. Dispositif de blocage selon l'une quelconque des revendications précédentes, **caractérisé en ce que** le dispositif de blocage (21) comporte un entraînement intégré ou externe, à moteur ou manuel (24, 52), de préférence un vérin, avec une transmission de distribution (25), pour agir en commun sur les unités de blocage mobiles (19).

10. Dispositif de blocage selon l'une quelconque des revendications précédentes, **caractérisé en ce que** l'entraînement combiné en coulissement et en blocage (22, 23) comporte plusieurs arbres à excentriques (26) respectivement disposés sur les points de jonction des paires d'unités de blocage (18, 19) avec des excentriques d'apport et de blocage (29, 31) à des niveaux différents.

11. Dispositif de blocage selon l'une quelconque des revendications précédentes, **caractérisé en ce que** les arbres à excentriques (26) comportent des leviers d'actionnement à plusieurs bras (27) pour la liaison avec l'entraînement (24) ou avec la transmission de distribution (25).

12. Dispositif de blocage selon l'une quelconque des revendications précédentes, **caractérisé en ce que** les excentriques d'approche (29) sont reliés au moyen de coulisseaux (30) aux unités de blocage mobiles voisines (19) et effectuent le déplacement coulissant d'approche.

13. Dispositif de blocage selon l'une quelconque des revendications précédentes, **caractérisé en ce que** l'excentrique de blocage (31) est relié au moyen d'un coulisseau (32) avec un agencement de coins de blocage (38, 39) pour produire le déplacement de blocage commun des unités de blocage mobiles (19).

14. Dispositif de blocage selon l'une quelconque des revendications précédentes, **caractérisé en ce que** le dispositif de blocage (1) comporte un ou plusieurs dispositifs d'apport (4, 5) du ou des appareil(s) de blocage (2, 3).

15. Dispositif de blocage selon l'une quelconque des revendications précédentes, **caractérisé en ce que** l'appareil de blocage (2, 3) comporte au moins un appui (17) pour la liaison avec le dispositif d'apport (4, 5) ou pour l'immobilisation en position de travail.

16. Dispositif de blocage selon l'une quelconque des revendications précédentes, **caractérisé en ce que** plusieurs appareils de blocage (2, 3) comportent un ou plusieurs appuis (17) pour la liaison mutuelle en agencement en rangées ou en agencement angulaire.

17. Dispositif de blocage selon l'une quelconque des revendications précédentes, **caractérisé en ce que** le dispositif d'amenée (5) comporte une fixation (48) ayant au moins un axe supplémentaire de réception de plusieurs appareils de blocage (2) et pour leur apport par l'intérieur vers des éléments de construction (8, 9) positionnés côté extérieur.

18. Dispositif de blocage selon l'une quelconque des revendications précédentes, **caractérisé en ce que** les appareils de blocage (2) sont disposés sur des modules d'apport (49) normalisés.

19. Dispositif de blocage selon l'une quelconque des revendications précédentes, **caractérisé en ce que** plusieurs modules d'apport (49) peuvent être reliés entre eux pour former un cadre de blocage modulaire (4).

20. Dispositif de blocage selon l'une quelconque des revendications précédentes, **caractérisé en ce que** les segments de blocage (20, 20') comportement des tiges (58, 58') alternativement saillantes qui pénètrent dans des orifices de brides (59) correspondants sur les brides pour éléments de construction (11, 11') associées.

21. Poste d'usinage avec au moins un dispositif de blocage (1) selon l'une quelconque des revendications précédentes, **caractérisé en ce que** le poste d'usinage (6) est conçu sous la forme d'un poste de formation du châssis ou de soudage pour des carrosseries de véhicules (8, 9).
